# EUROPEAN PATENT SPECIFICATION

(11) **EP 3 475 604 B1**
(45) Date of publication and mention of the grant of the patent: **13.12.2023**
(21) Application number: 17755553.9
(22) Date of filing: 22.06.2017
(51) Int. Cl.: F17C 1/12

(54) **WALL STRUCTURE OF HEAT INSULATING BOX**
WANDSTRUKTUR EINER WÄRMEDÄMMBOX
STRUCTURE DE PAROI DE BOÎTIER D'ISOLATION THERMIQUE

(30) Priority: 23.06.2016 FI 20165519
(43) Date of publication of application: 01.05.2019
(73) Proprietor: Metsäliitto Osuuskunta, 02100 Espoo (FI)
(72) Inventor: SOKKA, Kasperi, 44200 Suolahti (FI)
(74) Representative: Laine IP Oy
(86) International application number: PCT/FI2017/050470
(87) International publication number: WO 2017/220865

(56) References cited:
- EP-A1- 2 792 589
- WO-A1-2007/052961
- GB-A- 1 380 294
- KR-A- 20160 016 866
- US-A1- 2010 288 778

## Description

The present invention relates to a wall structure of a thermal insulating casing, according to the preamble of Claim 1.

A thermal insulation casing of this kind is intended for the insulation of metal tanks which contain liquefied gas. Typically, the tanks are intended for the transportation and storage of liquefied gas both at sea and on land.

There are wood-veneer panels in the wall of the thermal insulation casing, which panels are joined to each other in order to form a three-dimensional structure, which includes an insulating material.

The present invention also relates to the use according to Claim 19.

Liquefied gas, such as liquefied natural gas (LNG), is transported on ships and stored in tanks, in which the gas is kept at very low temperatures in order to significantly reduce the volume of the gas, even though the operation is carried out at normal atmospheric pressure. On LNG vessels, the gas is kept at a temperature of less than -160 °C.

In principle, there are two basic types of gas tanks in ships, namely, they are either relatively thick-walled self-supporting tanks or, correspondingly, membrane tanks. The self-supporting structures are for example rigid spherical, cylindrical or prismatic metal tanks. The membrane tanks are also made of a metal alloy, but their wall thickness is insufficient to make the structure self-supporting, instead the supporting element of the structure is the hull of the vessel. By using membrane tank technology, it is easier and more economical to increase the size of the tanks, and the largest LNG vessels are in fact equipped with membrane tanks.

The membrane tank is insulated from the hull of the ship. Usually, the insulation is achieved by means of a plywood panel honeycomb, which is provided with an insulator, such as perlite. The honeycombs may comprise tens of thousands of plywood cells, i.e. casings, which are filled with insulating material, and which form honeycombs that are arranged in at least two layers, which honeycombs protect the ship hull from freezing and, correspondingly, the liquefied gas from warming-up.

Traditional box-shaped plywood panel-based insulation casings are described in DE Patent Publication No. 24 41 392.

In the latest types of membrane tanks, open cells or casings are used instead of closed plywood boxes. An open cell does not have walls arranged between the surface plates. Instead, there are pillars that join the surface panels to each other at a predetermined distance.

The state of the art is described in the publications WO 2014/167206, WO 2014/195614, WO 2015/052446, US 2014299038, EP 2792589, GB 1380294 and GB 860815.

KR 20160016866 A discloses a method for manufacturing a self-supporting case intended to provide a thermally insulated tank for a fluid storage tank having a fluid tight membrane. The case comprises a base panel and a cover panel fixed to a support web.

GB 1380294 A discloses a low temperature liquefied gas storage tank wherein plywood treated to render it liquid-tight is used as an inner tank wall and applied to the inner side of a rigid outer shell of the tank.

Although the thermal insulation of the structure improves when as much as possible thermal insulation material is used in relation to the surface plates and other wood material, the lack of transverse walls imposes even greater demands on the strength properties of the surface panels. In prevailing extremely cold conditions, they must be able to withstand, without breaking, the weight of the membrane tank and smoothly transfer forces against the hull of the vessel.

The surface layers of the insulation cells are also susceptible to compressive forces caused by the liquid that is stored in the tank, which forces are, among others, derived from the static and dynamic forces caused by the movement of the liquefied gas inside the tank. This is called the "sloshing phenomenon", i.e. the splashing or sloshing of the liquid inside the tank. The sloshing phenomenon has been discussed, for example, in the publication Norske Veritas, Design Sloshing Loads for LNG Membrane Tanks.

As a result of the compression, the plywood panels are bent in the direction of the fibre layers, especially in the direction of the grains of the fibre layers of the surface. Compression forces also generate traction forces on fibre layers which can result in delamination.

In fact, it has been found that traditional plywood panels made of hardwood or softwood do not meet the requirements set, particularly regarding the withstanding of point loads.

It is an aim of the present invention is to eliminate at least some of the problems associated with the art, and to provide a completely new solution for the implementation of the wall structure.

The present invention is based on the concept that at least a part of the thermal insulation casings of the honeycomb-structured thermal insulation wall comprise open casings, the surface and base panels of which are wood-veneer panels, which are joined to each other with pillars. In this case, the wood-veneer panels are multilayer panels, at least part of which are comprised of, besides wood-veneer layers that are stacked one upon the other and glued together, at least one reinforcing layer, which is glued to at least one wood-veneer layer, in order to increase the strength of the panel. The gluing can be carried out as a separate gluing to adjacent surfaces, or as a one-step gluing, together with a single compression.

Surprisingly, it has been found that the described structure works well in the surface of the thermal insulation casing, and in practical conditions, delamination will not occur, even if the reinforcing layer used possesses thermal expansion properties that differ from the corresponding properties of a fibre panel.

By means of the present invention, it is possible, even in insulating layers according to the new technology, to use birch fibre panels as surface panels, because the strength properties of the birch fibre panels can be significantly improved by means of a reinforcing layer.

More specifically, the wall structure according to the present invention is mainly characterized by what is stated in the characterizing part of Claim 1.

The use according to the present invention is characterized by what is stated in Claim 19.

Considerable advantages are achieved with the present invention. Thus, the structure becomes light but strong. Typically, of the strength properties, one or more of tensile strength, compressive strength, shear strength, impact strength and flexural strength, is better than those properties of a corresponding panel, which does not include such a reinforcing layer.

The panels can be made of veneer layers, which are produced from wood, the strength or hardness properties of which, as such, are insufficient to ensure the properties that are required in the new technique.

By means of the present invention, for example birch veneer panels can be used as surface panels in the insulating layers according to the new technique, because the strength properties of the birch veneer panels can be significantly improved by using a reinforcing layer.

In the following, preferred embodiments are examined.
Figure 1 shows the basic structure of an open honeycomb, by using an axonometric illustration;
Figures 2a-2b show, as side profiles, the basic structure of sheets equipped with one reinforcing layer; and
Figure 3 shows a cross-section of a bottom part of a hull of a vessel used for transporting, for example, liquefied natural gas, which bottom part is equipped with a wall structure for insulating the liquefied gas tanks, and with which wall structure the tanks are insulated from the hull of the vessel.

In the present context, the term "reinforcing layer" refers to a material layer, the mechanical and/or thermal properties of which are better than the corresponding properties of an untreated veneer layer of a multilayer structure. Typically, the properties of the reinforcing layer are better than of the veneer layer, regarding at least one, preferably regarding two or more, of the following strengths: tensile strength, compressive strength, shear strength, impact strength or flexural strength. The thickness of the reinforcing layer depends on the material but is typically approximately 0.01-5 mm, especially approximately 0.1-3 mm.

As noted above, in the present technology, a thermal insulation casing is provided which comprises, for example, two panels which are arranged at a certain distance from each other, with vertical supports arranged between them. The open structure is filled with insulating material.

In one embodiment, the wood-veneer panels are joined to each other with pillars, in order to form a three-dimensional structure, such as a casing with open sides, in particular they are joined to each other with 2-20 pillars, in which case the cross-section of the pillars is most suitably shaped in the form of a regular polygon, in particular in the form of a square, rectangular, in the form of a parallelogram or hexagon-shaped.

In one embodiment, a wall structure is provided, each casing of which includes multilayer panels, which comprise a reinforcing layer which, in turn, is glued to at least one wood-veneer layer, in order to increase the strength of the panels. There may be one or more reinforcing layers.

It is also possible to produce thermal insulation casings, one surface panel of which, according to the present technology, comprises a multilayer panel with a reinforcing layer, whereas the other, the opposite surface panel, is made of another material.

In one embodiment, the reinforcing layer is glued to the wood-veneer layer which forms the surface layer of the sheet, for example immediately below it.

At least one reinforcing layer is glued to the wood-veneer layer, which is located between the two surface layers that form the two opposite surfaces of the panel. Typically, there are 1-10 layers, especially 1-10 veneer layers, between the surface veneer layer and the reinforcing layer.

The multilayer panel used in the structure of the thermal insulation casing, in one embodiment, comprises a wood-veneer panel, which is formed
- by stacking several wood-veneer layers and at least one reinforcing layer on top of each other;
- by arranging adhesive layers between these layers, in order to join the layers to each other; and
- by pressing the layers together by using a single compression.

The reinforcing layer may be a uniform film, most suitably a metal film such as an aluminium film, or a carbon fibre or glass fibre layer. The thickness of the metal film used as the reinforcing layer is, for example, approximately 0.01-3 mm, in particular approximately 0.05-1 mm.

The reinforcing layer may also be a fibre layer, which is impregnated with a suitable component, in order to modify its strength properties. In particular, a polymer or its precursor can be used for the impregnation. Examples are resins or similar binders, which are based on natural monomers, such as lignin or tannin, or synthetic monomers, such as phenol or melamine, or combinations thereof, which are either cross-linked or cross-linkable. As described, the impregnation can also be carried out with precursors of polymeric binders, such as monomers or oligomers or polymers which, for example, after polymerisation or crosslinking, or after polymerisation and crosslinking, form a suitable binder for modifying the strength properties of the fibre sheet.

In one embodiment, the reinforcing layer comprises a fibre layer, which is impregnated with the resin used for the gluing. In particular, the reinforcing layer comprises a fibre layer, which is impregnated throughout with the resin used for the gluing.

Thus, in one embodiment, the multilayer panel, which is used in the thermal insulation casing, and which forms at least one planar surface, comprises a wood-veneer panel, which comprises wood-veneers that are stacked on top of each other and hot compressed together, in which case, on the surfaces of the previously unimpregnated wood-veneers, resin is applied on at least 50 %, preferably at least 75 %, more preferably 100 %, of the surface area of those wood-veneer layers which come against each other when they are stacked.

The thickness of the impregnated fibre layer that is used as the reinforcing layer is, for example, 0.1-3 mm, such as 0.5-2.5 mm.

The multilayer panel according to the previous embodiment can be produced
- by stacking several wood-veneer layers and at least one reinforcing layer on top of each other, and
- by gluing together the wood-veneer layers and at least one reinforcing layer, using resin adhesive at an elevated pressure, in order to form a layered wood-veneer product, whereby
- impregnation resin is absorbed into at least part of the wood-veneer layers before the wood-veneer layers are glued together.

Typically, impregnation resin is absorbed into the wood-veneer layers, the molar mass of which resin is lower than the molar mass of the resin adhesive, in which case the impregnation resin is absorbed at least partly into the fibres of the wood-veneers of the wood-veneer layers.

According to one embodiment, into one or several individual wood-veneer layers is absorbed 0.1-100 parts by weight, in particular 1-75 parts by weight, of the impregnation resin, per 100 parts by weight of said wood-veneer layer, in order to form the reinforcing layer of the wood-veneer layer.

The impregnation resin can be brought in between the wood-veneer layers, on top of a carrier, especially on top of a sheet-like or plate-like carrier. In one embodiment, the quantity of impregnation resin to be used to form the reinforcing layer is approximately 10-500 parts by weight, especially 20-350 parts by weight, calculated based on 100 parts by weight of the carrier.

In one embodiment, at least one of the surface panels of the thermal insulation casing comprises 1-5 veneer layers on top of each other, which layers are impregnated all through with an adhesive, in which case the surface strength of these veneer layers is greater than the surface strength of those veneer layers which are arranged between the said veneer layers.

In one embodiment, the reinforcing layer is a uniform film, most suitably a metal film, such as an aluminium film or a carbon fibre or glass fibre layer, as mentioned above.

In one embodiment, the reinforcing layer is at least one aluminium film, which is glued to at least one of the surface veneer layers of the multilayer panel. Most suitably, several, for example 2-10 aluminium films, are used as the reinforcing layer, in which case such a film is glued to at least both surface veneer layers.

In one embodiment, the reinforcing layer is glued with hot-melt adhesive or a reactive adhesive, in particular with a reactive PUR adhesive, or a combination thereof.

The structure described above may comprise, in the form of reinforcing layers, both the fibre layers into which resin used for gluing has been absorbed, and the layers that are comprised of uniform films.

In one embodiment, the multilayer panel comprises several reinforcing layers, in particular it comprises 2-15 reinforcing layers.

The multilayer sheet may comprise fibre layers which are sourced from hardwood or softwood.

In one embodiment, it comprises veneer layers made of hardwood, in particular hardwood such as birch, in particular it comprises mainly such veneer layers which comprise hardwood such as birch. In one embodiment, the fibre layers of the multilayer panel consist entirely of birch veneer layers.

In one embodiment, the multilayer sheet comprises, instead of birch or besides birch, also another material. Such "other material" may, for example, be comprised of another type of fibre material, such as another wood species which, with regard to its strength properties, is already as such suitable for the suggested use. These wood species are hard wood species, such as beech and oak, and hard wood species from tropical regions.

One embodiment therefore provides for the use of a multi-layered birch fibre panel in the walls of the thermal insulation casing that is designed for insulation of metal tanks containing liquefied natural gas, which birch fibre panel comprises at least one reinforcing layer that is glued to the birch fibre sheet.

In one embodiment, the multilayer sheet may comprise, on its opposite surfaces, 2-5 veneer layers on top of each other, 1-3 of which are arranged, regarding their grain direction, crosswise to the adjacent veneer layers.

In one embodiment, it comprises, on both of its opposite surfaces, 2-5 veneer layers on top of each other, and at least one reinforcing layer which is arranged between them.

The wood-veneer layers of the multilayer sheet are, for example, glued together by using, as the resin, phenol resin, phenol resorcinol resin, melamine resin, urea-melamine resin or lignin-based resin, preferably phenol formaldehyde resin or lignin-based resin.

The multilayer panel is typically produced by applying hot compression, in particular by applying a single compression, on wood-veneer layers that are stacked on top of each other and at least one reinforcing layer that is between them, the compression being carried out at a temperature of 100-160 °C and at a pressure of 1-10 MPa.

In one application, the thickness of the wood-veneer sheets is 4-120 mm.

Typically, the density of the multilayer sheets is approximately 750 kg/m³, most suitably approximately 800-1350 kg/m³.

The wood-veneer panels are joined to each other with pillars, in order to form an open three-dimensional structure, which is filled with a thermal insulation material, such as polyurethane or mineral wool. The mineral wool can be, for example, glass wool or rock wool.

In the following, preferred embodiments are examined with reference to the accompanying drawings.

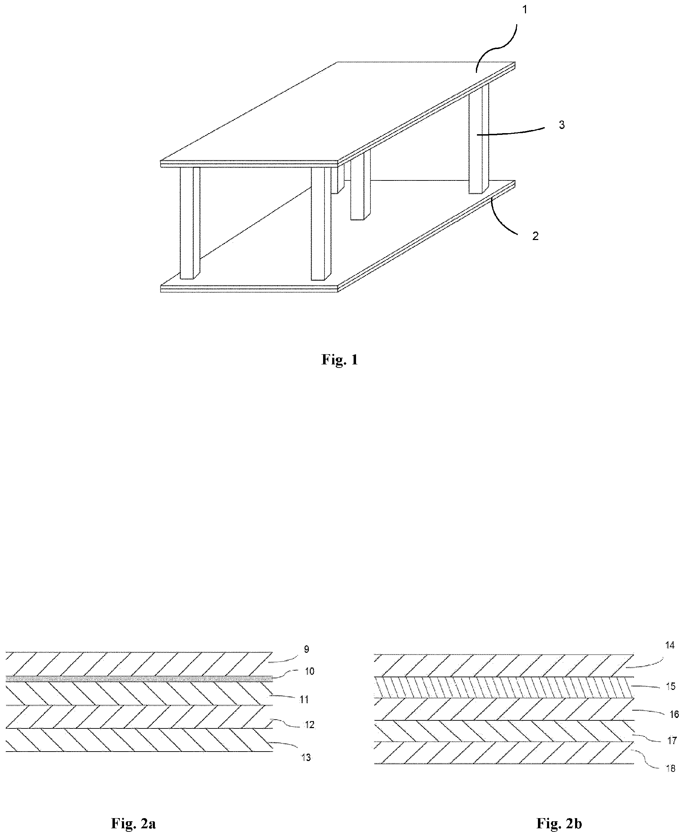

Figure 1 shows the basic structure of a honeycomb with a multilayer panel structure that is to be fitted between the membrane tank wall and the hull of the LNG vessel. It comprises two panels, 1 and 2, which are arranged at a certain distance from each other, and which are joined to each other with pillars 3, which join the panels together and, at the same time, which transfer the pressure, which is directed at one sheet, to the second sheet.

In order to prevent collapse of the structure, the cross sections of the pillars differ from a circle. For example, they may be polygonal in shape, in which case cross-sections having the form of polygons of 3, 4, 5 or 6 sides are particularly suitable for preventing distortion.

Generally, the distance between the panels is approximately 100-500 mm, especially approximately 150-400 mm, and most suitably approximately 180-350 mm. The width of the panels is at least 100 mm, most suitably 150-900 mm, especially approximately 300-800 mm, and their length is more than 150 mm, most suitably 200-1500 mm, for example 400-1200 mm.

The thickness of the surface panels 1 and 2 is approximately 4-120 mm, especially approximately 9-100 mm, and they are comprised of 3-88, for example 4-20, veneer layers.

The pillars are made of a material which is strong and difficult to compress, and, particularly advantageously, which is heat-insulating, such as wood or wood composite or plastic composite, in which case the wood and wood composite materials are particularly advantageous. Their number varies depending on the surface area of the sheet, but generally the number is sufficient to distribute the pressure which is directed at the surface panels evenly at the panels of the opposite side. In general, it can be established that the spacing between the pillars should be at maximum 100-500 mm. To ensure adequate thermal insulation, the surface area of the cross-section of the pillars is in total less than approximately 25 % of the surface area of the surface panels, especially less than 20 %. However, in order to obtain sufficient strength properties, the surface area of their cross-section is in total greater than approximately 1 %, especially greater than approximately 5 % of the surface area of the surface panel. The surface area of the cross-sections of individual supports is approximately 100-5000 mm², especially approximately 250-3000 mm².

Figure 2a shows a multilayer structure of four veneer layers, 9, 11-13, which consist of wood-veneer layers, the thickness of which is typically approximately 0.7-2.0 mm. A reinforcing layer 10 is arranged, which layer may be, for example, a metal film or metal layer, the thickness of which is typically approximately 0.05-1.5 mm. The reinforcing layer may also be a polymer material, as well as a composite of polymers and reinforcing fibres, such as a glass fibre or carbon fibre structure. The reinforcing layer 10 is located between the wood-veneer layers 9, 11-13, in the figure, below the surface veneer layer.

Figure 2b, in turn, shows a multilayer panel which comprises five veneer layers, one of which (the layer with reference number 15), is impregnated all through with an impregnation resin, in order to form a reinforcing layer.

The wood-veneer layers shown in Figures 2a-2b may be arranged in parallel to the direction of the grains of the veneers, but preferably the fibres of at least one veneer layer are arranged transversely to the grains of the other veneer layers. The number of veneer layers, as well as the number of reinforcing layers, may vary. Generally, the multilayer structures according to the figures comprise approximately 3-25 veneer layers, and the number of the reinforcing layers is especially 1-5.

In the solutions according to the figures, the reinforcing layers are asymmetrically arranged, but it is clear that they can also be arranged symmetrically, for example, in the case of a single layer, in the centre of the structure, and in the case of two layers, both at the same distance from the surface veneer layer that is nearest.

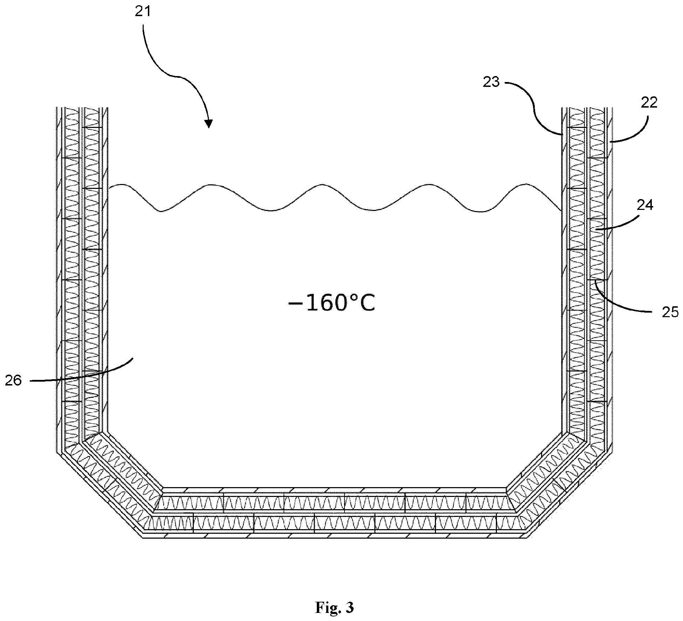

Figure 3, in turn, shows a cross section of a vessel, and the reference number 22 indicates the hull of the vessel. Reference number 21, in turn, refers to a membrane-structured tank, the wall 23 of which is typically made of thin steel sheets, the thickness of which is approximately 0.4-1.0 mm, and which are welded to each other. An example of a suitable steel grade is a steel that is produced under the brand name Invar, which comprises a significant amount of nickel, even up to approximately 30-35 % by weight.

The thermal insulation casings 24 are placed between the membrane tank 21, 23 and the hull 22 of the vessel, which casings are comprised of, as already shown in Figure 1, an open plywood cell 24, shown in Figure 1, which cell is filled with a thermal-insulating material. Examples of this are mineral wool, perlite and foamed polymers, such as polystyrene or polyurethane. The cells are arranged in several layers, in which case, in the layers, the seams between the cells touch different points, in order to prevent the formation of cold bridges.

The present wall structure may be comprised of a large number of the thermal insulation casings described above. Thus, for enclosing and insulating the membrane tanks of a LNG tanker, a number of 1000-250,000, for example 10,000-100,000, heat insulating casings described above may be used.

Although the above description of the application of the present thermal insulation casings mainly refers to the enclosure of the membrane tanks of LNG tankers, it is clear that the present casings can also be used for enclosing and insulating other gas tanks (such as tanks designed for LPG tankers). The casings are suitable for gas tanks both for transporting liquefied gas and for storing liquefied gas, both at sea and on land.

### Reference signs list

- 1, 2: panels
- 3; 25: pillars
- 10; 15: reinforcing layer
- 9, 11-13: wood-veneer layers
- 14, 16-18: wood-veneer layers
- 21: membrane-structured tank
- 22: hull of vessel
- 23: wall
- 24: thermal insulation casing
- 26: liquid gas

### Citation List

### Patent Publications

DE 24 41 392
WO 2014/167206
WO 2014/195614
WO 2015/052446.
US 2014299038
EP 2792589
GB 1380294
GB 860815

### Non-Patent Publications

Norske Veritas, Design Sloshing Loads for LNG Membrane Tanks, May 2011, Guidance Note NI 554 DT R00 E

## Claims

1. A wall structure of a thermal insulation casing, which is intended for the insulation of metal tanks which contain liquefied gas, in particular liquefied natural gas, which wall structure comprises wood-veneer panels (1, 2) that are joined to each other in order to form a three-dimensional structure,
**characterized in that** the wood-veneer panels are joined together with pillars in order to form a casing with open sides and at least part of the wood-veneer panels (1, 2) are multilayer panels, which comprise wood-veneer layers (9, 11-13; 14, 16-18) that are stacked on top of each other and glued together, and at least one reinforcing layer (10; 15) that is glued to at least one wood-veneer layer, in order to increase the strength of the panel,
wherein the wall structure comprises at least one reinforcing layer (10; 15) which is glued to the wood-veneer layer (11; 16) which is located between the surface layers (9, 13; 14, 18) that are formed of the two opposite surfaces of the panel.

2. The wall structure according to claim 1, **characterized in that** it consists entirely of multilayer panels, which comprise wood-veneer layers ( 9, 11-13; 14, 16-18) that are stacked one upon the other and glued together, and at least one reinforcing layer (10; 15), which is glued to at least one wood-veneer layer (9, 11; 14, 16), by using a one-step gluing or a separate gluing to adjacent surfaces (1, 2), in order to increase the strength of the panel.

3. The wall structure according to any of the preceding claims,
**characterized in that** the multilayer panel comprises a wood-veneer panel, which is formed
- by stacking several wood-veneer layers (9, 11-13; 14, 16-18) and at least one reinforcing layer (10; 15) on top of each other;
- by arranging adhesive layers between these layers, in order to join the layers to each other; and
- by compressing the layers together by applying a single compression.

4. The wall structure according to any of the preceding claims,
**characterized in that** the multilayer panel comprises a wood-veneer panel, which consists of wood-veneers (9, 11-13; 14, 16-18) that are stacked on top of each other and hot compressed together, in which case, on the surfaces of the previously unimpregnated wood-veneers, resin is applied on at least 50 %, preferably at least 75 %, more preferably 100 %, of the surface area of those wood-veneer layers which come against each other when they are stacked.

5. The wall structure according to any of the preceding claims,
**characterized in that** the reinforcing layer is formed of a fibre layer which is impregnated with the resin used for gluing, in particular the reinforcing layer (15) is formed of a fibre layer which is impregnated all through with the resin used for gluing.

6. The wall structure according to any of the preceding claims,
**characterized in that** the multilayer panel comprises a wood-veneer panel which is formed
- by stacking several wood-veneer layers and at least one reinforcing layer on top of each other; and
- by gluing together the wood-veneer layers and at least one reinforcing layer, with resin adhesive at an elevated pressure, in order to form a layered wood-veneer product, whereby
- impregnation resin is absorbed into at least part of the wood-veneer layers, before the wood-veneer layers are glued together.

7. The wall structure according to any of Claims 4-6, **characterized in that** impregnation resin is absorbed into the wood-veneer layers, the molar mass of which resin is lower than the molar mass of the resin adhesive, in which case the impregnation resin is absorbed at least partly into the fibres of the wood-veneers of the wood-veneer layers, wherein preferably into one or several individual wood-veneer layers, is absorbed impregnation resin 0.1-100 parts by weight, in particular 1-75 parts by weight, per 100 parts by weight of said wood-veneer layer, in order to form a reinforcing layer (15) of the wood-veneer layer.

8. The wall structure according to claim 6 or 7, **characterized in that** the impregnation resin is brought, on top of a carrier, in between the layers of the wood-veneer layers, especially on top of a sheet-like or plate-like carrier, the quantity of impregnation resin preferably being approximately 10-500 parts by weight, especially 20-350 parts by weight, calculated based on 100 parts by weight of the carrier.

9. The wall structure according to any of the preceding claims,
**characterized in that** the wood-veneer layers (9, 11-13; 14, 16-18) of the multilayer panel are glued together by using, as the resin, phenol resin, phenol resorcinol resin, melamine resin, urea melamine resin or a lignin-based resin, preferably phenol formaldehyde resin or a lignin-based resin.

10. The wall structure according to any of the preceding claims,
**characterized in that** the reinforcing layer (10) is a uniform film, most suitably a metal film, such as an aluminium film or a carbon fibre or glass fibre layer in particular the reinforcing layer (10) is a uniform film, most suitably an aluminium film, which is glued to at least one of the surface veneer layers (9) of the multilayer sheet, most suitably, to both surface veneer layers.

11. The wall structure according to any of the preceding claims,
**characterized in that** the reinforcing layer (10; 15) is glued with hot-melt adhesive or a reactive adhesive, in particular with a reactive PUR adhesive, or a combination thereof.

12. The wall structure according to any of the preceding claims,
**characterized in that** the multilayer sheet contains several reinforcing layers (10; 15), in particular it comprises 2-15 reinforcing layers, and it comprises, as reinforcing layers, the fibre layers into which both resin used for gluing has been absorbed, and the layers that consist of uniform films.

13. The wall structure according to any of the preceding claims,
**characterized in that** the multilayer sheet comprises veneer layers ( 9, 11-13; 14, 16-18) made of hardwood, in particular of birch, possibly together with veneer layers that are comprised of other wood species, which wood species are hardwood species, such as beech and oak, and hard wood species from tropical regions, preferably the veneer layers are comprised of birch.

14. The wall structure according to any of the preceding claims,
**characterized in that** the multilayer sheet is produced by hot pressing, in particular by applying a single compression, of wood-veneer layers (9, 11-13; 14, 16-18) that are stacked on top of each other and of at least one reinforcing layer (10; 15) that is between them, in which case pressing is carried out at a temperature of 100-160 °C and at a pressure of 1-10 MPa.

15. The wall structure according to any of the preceding claims,
**characterized in that** it comprises, on its opposite surfaces, 2-5 veneer layers (9, 11-13; 14, 16-18) on top of each other, 1-3 of which are arranged, regarding their grain direction, crosswise to the adjacent veneer layers.

16. The wall structure according to any of the preceding claims,
**characterized in that** it comprises, on both of its opposite surfaces, 2-5 veneer layers (9, 11-13; 14, 16-18) on top of each other, and at least one reinforcing layer (10; 15) which is arranged between them, or it comprises, on opposite surfaces, 1-5 veneer layers on top of each other, which are impregnated all through with an adhesive, in which case the strength, such as the surface strength, of these veneer layers is greater than the surface strength of those veneer layers, which are arranged between the said veneer layers.

17. The wall structure according to any of the preceding claims,
**characterized in that** the wood-veneer sheets are joined to each other with 2-20 pillars, the cross-section of the pillars (3) being most suitably shaped in the form of a regular polygon, in particular in the form of a square, rectangular, in the form of a parallelogram or hexagon-shaped,
the wood-veneer panels preferably being joined to each other with pillars (3) in order to form a three-dimensional structure which is filled with thermal insulating material, such as polyurethane or mineral wool.

18. The wall structure according to any of the preceding claims,
**characterized in that** the wood-veneer panels (1, 2) comprise rectangular-shaped sheets, the width of which is at least 100 mm, most suitably 150-750 mm, and the length of which is greater than 150 mm, most suitably 200-1500 mm, and the thickness of the wood-veneer panels (1, 2) is 4-120 mm and the density of the wood-veneer panels having the reinforcing layers is greater than approximately 750 kg/m³, most suitably approximately 800-1350 kg/m³.

19. Use of multilayered birch fibre panels in a wall structure according to any of the preceding claims, comprising at least one reinforcing layer (10; 15) that is glued to the birch fibre panel for improving its flexural strength in the walls of a thermal insulation casing, formed by wood-veneer panels joined together with pillars in order to form a casing with open sides and which is intended to insulate metal tanks that contain liquefied gas, in particular liquefied natural gas,
wherein the birch fibre panel comprises at least one reinforcing layer (10; 15) which is glued to the wood-veneer layer (11; 16) which is located between the surface layers (9, 13; 14, 18) that are formed of the two opposite surfaces of the panel.

## Patentansprüche

1. Wandstruktur eines Wärmedämmgehäuses, das zur Isolierung von Metalltanks, die Flüssiggas, insbesondere Flüssigerdgas, enthalten, bestimmt ist, wobei die Wandstruktur Holzfurnierplatten (1, 2) umfasst, die der Reihe nach miteinander verbunden sind, um eine dreidimensionale Struktur zu bilden, **dadurch gekennzeichnet, dass** die Holzfurnierplatten mit Säulen verbunden sind, um ein Gehäuse mit offenen Seiten zu bilden, und mindestens ein Teil der Holzfurnierplatten (1, 2) Mehrschichtplatten sind, die übereinander gestapelte und miteinander verklebte Holzfurnierschichten (9, 11-13; 14, 16-18) und mindestens eine Verstärkungsschicht (10; 15), die mit mindestens einer Holzfurnierschicht verklebt ist, um die Festigkeit der Platte zu erhöhen, umfassen,
wobei die Wandstruktur mindestens eine Verstärkungsschicht (10; 15) umfasst, die mit der Holzfurnierschicht (11; 16) verklebt ist, die sich zwischen den Oberflächenschichten (9, 13; 14, 18) befindet, die aus den zwei gegenüberliegenden Oberflächen der Platte gebildet sind.

2. Wandstruktur nach Anspruch 1, **dadurch gekennzeichnet, dass** sie vollständig aus Mehrschichtplatten besteht, die übereinander gestapelte und miteinander verklebte Holzfurnierschichten (9, 11-13; 14, 16-18) und mindestens eine Verstärkungsschicht (10; 15) umfassen, die mit mindestens einer Holzfurnierschicht (9, 11; 14, 16) durch eine einstufige Verklebung oder eine separate Verklebung mit angrenzenden Oberflächen (1, 2) verklebt ist, um die Festigkeit der Platte zu erhöhen.

3. Wandstruktur nach einem der vorstehenden Ansprüche, **dadurch gekennzeichnet, dass** die Mehrschichtplatte eine Holzfurnierplatte umfasst, die geformt wird
- durch Übereinanderstapeln mehrerer Holzfurnierschichten (9, 11-13; 14, 16-18) und mindestens einer Verstärkungsschicht (10; 15);
- durch Anordnen von Klebeschichten zwischen diesen Schichten, um die Schichten miteinander zu verbinden; und
- durch Zusammenpressen der Schichten durch Anwenden eines einzigen Pressvorgangs.

4. Wandstruktur nach einem der vorstehenden Ansprüche, **dadurch gekennzeichnet, dass** die Mehrschichtplatte eine Holzfurnierplatte umfasst, die aus Holzfurnieren (9, 11-13; 14, 16-18) besteht, die übereinander gestapelt und heiß zusammengepresst werden, wobei auf die Oberflächen der zuvor unimprägnierten Holzfurniere Harz auf mindestens 50 %, bevorzugt mindestens 75 %, bevorzugter 100 %, des Oberflächenbereichs jener Holzfurnierschichten, die beim Stapeln aufeinanderliegen, aufgetragen wird.

5. Wandstruktur nach einem der vorstehenden Ansprüche, **dadurch gekennzeichnet, dass** die Verstärkungsschicht aus einer Faserschicht gebildet ist, die mit dem zum Kleben verwendeten Harz imprägniert ist, insbesondere die Verstärkungsschicht (15) aus einer Faserschicht gebildet ist, die durchgehend mit dem zum Kleben verwendeten Harz imprägniert ist.

6. Wandstruktur nach einem der vorstehenden Ansprüche, **dadurch gekennzeichnet, dass** die Mehrschichtplatte eine Holzfurnierplatte umfasst, die gebildet wird
- durch Übereinanderstapeln mehrerer Holzfurnierschichten und mindestens einer Verstärkungsschicht; und
- durch Zusammenkleben der Holzfurnierschichten und mindestens einer Verstärkungsschicht mit Harzkleber bei erhöhtem Druck, um ein geschichtetes Holzfurnierprodukt zu bilden, wobei
- Imprägnierharz in mindestens einen Teil der Holzfurnierschichten absorbiert wird, bevor die Holzfurnierschichten miteinander verklebt werden.

7. Wandstruktur nach einem der Ansprüche 4-6, **dadurch gekennzeichnet, dass** in die Holzfurnierschichten Imprägnierharz absorbiert wird, wobei die Molmasse des Harzes geringer ist als die Molmasse des Harzklebers, wobei in diesem Fall das Imprägnierharz mindestens teilweise in die Fasern der Holzfurniere der Holzfurnierschichten absorbiert wird, wobei bevorzugt Imprägnierharz zu 0,1-100 Gewichtsteilen, insbesondere zu 1-75 Gewichtsteilen, pro 100 Gewichtsteile der Holzfurnierschicht in eine oder mehrere einzelne Holzfurnierschichten absorbiert wird, um eine Verstärkungsschicht (15) der Holzfurnierschicht zu bilden.

8. Wandstruktur nach Anspruch 6 oder 7, **dadurch gekennzeichnet, dass** das Imprägnierharz auf einer Oberseite eines Trägers zwischen die Schichten der Holzfurnierschichten, insbesondere auf eine Oberseite eines bahn- oder plattenförmigen Trägers, aufgebracht ist, wobei die Menge an Imprägnierharz bevorzugt etwa 10-500 Gewichtsteile, insbesondere 20-350 Gewichtsteile, bezogen auf 100 Gewichtsteile des Trägers, beträgt.

9. Wandstruktur nach einem der vorstehenden Ansprüche, **dadurch gekennzeichnet, dass** die Holzfurnierschichten (9, 11-13; 14, 16-18) der Mehrschichtplatte unter Verwendung von Phenolharz, Phenolresorcinharz, Melaminharz, Harnstoffmelaminharz oder einem Harz auf Ligninbasis, bevorzugt Phenolformaldehydharz oder einem Harz auf Ligninbasis, als Harz miteinander verklebt sind.

10. Wandstruktur nach einem der vorstehenden Ansprüche, **dadurch gekennzeichnet, dass** die Verstärkungsschicht (10) ein gleichmäßiger Film ist, am besten ein Metallfilm, beispielsweise ein Aluminiumfolie oder eine Kohlefaser- oder Glasfaserschicht, wobei insbesondere die Verstärkungsschicht (10) ein gleichmäßiger Film ist, am besten ein Aluminiumfilm, der auf mindestens eine der Oberflächenfurnierschichten (9) der mehrschichtigen Bahn, am besten auf beide Oberflächenfurnierschichten, geklebt ist.

11. Wandstruktur nach einem der vorstehenden Ansprüche, **dadurch gekennzeichnet, dass** die Verstärkungsschicht (10; 15) mit Schmelzkleber oder einem reaktiven Kleber, insbesondere mit einem reaktiven PUR-Kleber, oder einer Kombination davon verklebt ist.

12. Wandstruktur nach einem der vorstehenden Ansprüche, **dadurch gekennzeichnet, dass** die mehrschichtige Bahn mehrere Verstärkungsschichten (10; 15), insbesondere 2-15 Verstärkungsschichten, enthält und als Verstärkungsschichten die Faserschichten, in die das zum Kleben verwendete Harz absorbiert ist, als auch die Schichten, die aus gleichmäßigen Filmen bestehen, umfasst.

13. Wandstruktur nach einem der vorstehenden Ansprüche, **dadurch gekennzeichnet, dass** die mehrschichtige Bahn Furnierschichten (9, 11-13; 14, 16-18) aus Hartholz, insbesondere aus Birke, gegebenenfalls zusammen mit Furnierschichten, die andere Holzarten umfassen, umfasst, wobei diese Holzarten Hartholzarten wie Buche und Eiche und Hartholzarten aus tropischen Regionen sind, wobei die Furnierschichten bevorzugt Birke umfassen.

14. Wandstruktur nach einem der vorstehenden Ansprüche, **dadurch gekennzeichnet, dass** die mehrschichtige Bahn durch Heißpressen, insbesondere durch Anwenden eines einmaligen Pressvorgangs, von Holzfurnierschichten (9, 11-13; 14, 16-18), die übereinandergestapelt sind, und mindestens einer dazwischen liegenden Verstärkungsschicht (10; 15) erzeugt wird, wobei das Pressen bei einer Temperatur von 100-160 °C und einem Druck von 1-10 MPa ausgeführt wird.

15. Wandstruktur nach einem der vorstehenden Ansprüche, **dadurch gekennzeichnet, dass** sie auf ihren gegenüberliegenden Oberflächen 2-5 übereinander gelegte Furnierschichten (9, 11-13; 14, 16-18) umfasst, von welchen 1-3 in ihrer Faserrichtung quer zu den angrenzenden Furnierschichten angeordnet sind.

16. Wandstruktur nach einem der vorstehenden Ansprüche, **dadurch gekennzeichnet, dass** sie auf beiden gegenüberliegenden Oberflächen jeweils 2-5 übereinander gelegte Furnierschichten (9, 11-13; 14, 16-18) und mindestens eine dazwischen angeordnete Verstärkungsschicht (10; 15) umfasst oder an gegenüberliegende Oberflächen 1-5 übereinander gelegte Furnierschichten, die vollflächig mit einem Kleber imprägniert sind, umfasst, wobei dann die Festigkeit, wie die Oberflächenfestigkeit, dieser Furnierschichten größer ist als die Oberflächenfestigkeit jener Furnierschichten, die zwischen den Furnierschichten angeordnet sind.

17. Wandstruktur nach einem der vorstehenden Ansprüche, **dadurch gekennzeichnet, dass** die Holzfurnierschichten durch 2-20 Säulen miteinander verbunden sind, wobei der Querschnitt der Säulen (3) zweckmäßigerweise die Form eines regelmäßigen Polygons aufweist, insbesondere die Form eines Quadrats, eines Rechtecks, in der Form eines Parallelogramms oder eines Sechsecks aufweist, wobei die Holzfurnierplatten bevorzugt durch Säulen (3) miteinander verbunden sind, um eine dreidimensionale Struktur zu bilden, die mit wärmeisolierendem Material wie Polyurethan oder Mineralwolle gefüllt ist.

18. Wandstruktur nach einem der vorstehenden Ansprüche, **dadurch gekennzeichnet, dass** die Holzfurnierplatten (1, 2) rechteckig geformte Bahnen umfassen, deren Breite mindestens 100 mm, am besten 150-750 mm, beträgt und deren Länge größer als 150 mm ist, am besten 200-1500 mm, und die Dicke der Holzfurnierplatten (1, 2) 4-120 mm ist und die Dichte der Holzfurnierplatten mit den Verstärkungsschichten größer als etwa 750 kg/m³, am besten etwa 800-1350 kg/m³ ist.

19. Verwendung von mehrschichtigen Birkenfaserplatten in einer Wandstruktur nach einem der vorstehenden Ansprüche, umfassend mindestens eine Verstärkungsschicht (10; 15), die mit der Birkenfaserplatte verklebt ist, um ihre Biegefestigkeit in den Wänden eines Wärmedämmgehäuses zu verbessern, das aus Holzfurnierplatten gebildet ist, die durch Säulen miteinander verbunden sind, um ein Gehäuse mit offenen Seiten zu bilden, und das dazu bestimmt ist, Metalltanks zu isolieren, die Flüssiggas, insbesondere Flüssigerdgas, enthalten,
wobei die Birkenfaserplatte mindestens eine Verstärkungsschicht (10; 15) umfasst, die mit der Holzfurnierschicht (11; 16) verklebt ist, die sich zwischen den Oberflächenschichten (9, 13; 14, 18) befindet, die aus den zwei gegenüberliegenden Oberflächen der Platte gebildet sind.

## Revendications

1. Structure de paroi d'un boîtier d'isolation thermique, qui est prévu pour l'isolation de réservoirs métalliques qui contiennent un gaz liquéfié, en particulier du gaz naturel liquéfié, laquelle structure de paroi comprend des panneaux de placage en bois (1, 2) qui sont reliés les uns aux autres afin de former une structure tridimensionnelle, **caractérisée en ce que** les panneaux de placage en bois sont reliés entre eux avec des piliers afin de former un boîtier avec des côtés ouverts et au moins une partie des panneaux de placage en bois (1, 2) sont des panneaux multicouches, qui comprennent des couches de placage en bois (9, 11-13 ; 14, 16-18) qui sont empilées les unes sur les autres et collées entre elles, et au moins une couche de renforcement (10 ; 15) qui est collée à au moins une couche de placage en bois, afin d'augmenter la résistance du panneau,
dans laquelle la structure de paroi comprend au moins une couche de renforcement (10 ; 15) qui est collée à la couche de placage en bois (11 ; 16) qui est située entre les couches superficielles (9, 13 ; 14, 18) qui sont formées par les deux surfaces opposées du panneau.

2. Structure de paroi selon la revendication 1, **caractérisée en ce qu'**elle consiste entièrement en panneaux multicouches, qui comprennent des couches de placage en bois (9, 11-13 ; 14, 16-18) qui sont empilées les unes sur les autres et collées entre elles, et au moins une couche de renforcement (10 ; 15), qui est collée à au moins une couche de placage en bois (9, 11 ; 14, 16), par collage en une seule étape ou par collage séparé à des surfaces (1,2) adjacentes, afin d'augmenter la résistance du panneau.

3. Structure de paroi selon l'une quelconque des revendications précédentes, **caractérisée en ce que** le panneau multicouche comprend un panneau de placage en bois qui est formé
- en empilant plusieurs couches de placage en bois (9, 11-13 ; 14, 16-18) et au moins une couche de renforcement (10 ; 15) les unes sur les autres ;
- en disposant des couches adhésives entre ces couches, afin de relier les couches entre elles ; et
- en comprimant les couches ensemble en appliquant une seule compression.

4. Structure de paroi selon l'une quelconque des revendications précédentes, **caractérisée en ce que** le panneau multicouche comprend un panneau de placage en bois, qui consiste en placages en bois (9, 11-13 ; 14, 16-18) qui sont empilés les uns sur les autres et comprimés à chaud ensemble, auquel cas, sur les surfaces des placages en bois préalablement non imprégnés, une résine est appliquée sur au moins 50 %, de préférence au moins 75 %, plus préférentiellement 100 %, de la superficie de ces couches de placage en bois qui viennent les unes contre les autres lorsqu'elles sont empilées.

5. Structure de paroi selon l'une quelconque des revendications précédentes, **caractérisée en ce que** la couche de renforcement est formée d'une couche de fibres qui est imprégnée avec la résine utilisée pour le collage, en particulier la couche de renforcement (15) est formée d'une couche de fibres qui est entièrement imprégnée avec la résine utilisée pour le collage.

6. Structure de paroi selon l'une quelconque des revendications précédentes, **caractérisée en ce que** le panneau multicouche comprend un panneau de placage en bois qui est formé
- en empilant plusieurs couches de placage en bois et au moins une couche de renforcement les unes sur les autres ; et
- en collant ensemble les couches de placage en bois et au moins une couche de renforcement, avec une résine adhésive à une pression élevée, afin de former un produit de placage en bois stratifié, selon lequel
- la résine d'imprégnation est absorbée dans au moins une partie des couches de placage en bois, avant que les couches de placage en bois ne soient collées ensemble.

7. Structure de paroi selon l'une quelconque des revendications 4-6, **caractérisée en ce que** la résine d'imprégnation est absorbée dans les couches de placage en bois, la masse molaire de laquelle résine est inférieure à la masse molaire de la résine adhésive, auquel cas la résine d'imprégnation est absorbée au moins partiellement dans les fibres des placages en bois des couches de placage en bois, dans laquelle de préférence dans une ou plusieurs couches de placage en bois individuelles, sont absorbées 0,1-100 parts en poids de résine d'imprégnation, en particulier 1-75 parts en poids, pour 100 parts en poids de ladite couche de placage en bois, afin de former une couche de renforcement (15) de la couche de placage en bois.

8. Structure de paroi selon la revendication 6 ou 7, **caractérisée en ce que** la résine d'imprégnation est amenée, sur un support, entre les couches des couches de placage en bois, en particulier sur un support en forme de feuille ou en forme de plaque, la quantité de résine d'imprégnation étant de préférence d'approximativement 10-500 parts en poids, en particulier de 20-350 parts en poids, calculée sur la base de 100 parts en poids du support.

9. Structure de paroi selon l'une quelconque des revendications précédentes, **caractérisée en ce que** les couches de placage en bois (9, 11-13 ; 14, 16-18) du panneau multicouche sont collées ensemble en utilisant, comme résine, une résine phénolique, une résine de phénol-résorcinol, une résine de mélamine, une résine d'urée-mélamine ou une résine à base de lignine, de préférence une résine de phénol-formaldéhyde ou une résine à base de lignine.

10. Structure de paroi selon l'une quelconque des revendications précédentes, **caractérisée en ce que** la couche de renforcement (10) est un film uniforme, de manière la plus appropriée un film métallique, tel qu'un film en aluminium ou une couche de fibres de carbone ou de fibres de verre, en particulier la couche de renforcement (10) est un film uniforme, de manière la plus appropriée un film en aluminium, qui est collé à au moins une des couches de placage superficielles (9) de la feuille multicouche, de manière la plus appropriée, aux deux couches de placage superficielles.

11. Structure de paroi selon l'une quelconque des revendications précédentes, **caractérisée en ce que** la couche de renforcement (10 ; 15) est collée avec un adhésif thermofusible ou un adhésif réactif, en particulier avec un adhésif PUR réactif, ou une combinaison de ceux-ci.

12. Structure de paroi selon l'une quelconque des revendications précédentes, **caractérisée en ce que** la feuille multicouche contient plusieurs couches de renforcement (10 ; 15), en particulier elle comprend 2-15 couches de renforcement, et elle comprend, comme couches de renforcement, les couches de fibres dans lesquelles la résine utilisée pour le collage a été absorbée, et les couches qui consistent en films uniformes.

13. Structure de paroi selon l'une quelconque des revendications précédentes, **caractérisée en ce que** la feuille multicouche comprend des couches de placage (9, 11-13 ; 14, 16-18) faites de bois dur, en particulier en bouleau, éventuellement conjointement avec des couches de placage qui sont composées d'autres essences de bois, lesquelles essences de bois sont des essences de bois durs, telles que le hêtre et le chêne, et des essences de bois durs provenant de régions tropicales, de préférence les couches de placage sont composées de bouleau.

14. Structure de paroi selon l'une quelconque des revendications précédentes, **caractérisée en ce que** la feuille multicouche est produite par le pressage à chaud, en particulier par l'application d'une unique compression, de couches de placage en bois (9, 11-13 ; 14, 16-18) qui sont empilées les unes sur les autres et d'au moins une couche de renforcement (10 ; 15) située entre elles, auquel cas le pressage est effectué à une température de 100 à 160 °C et à une pression de 1 à 10 MPa.

15. Structure de paroi selon l'une quelconque des revendications précédentes, **caractérisée en ce qu'**elle comprend, sur ses surfaces opposées, 2-5 couches de placage (9, 11-13 ; 14, 16-18) les unes sur les autres, parmi lesquelles 1-3 sont agencées, en prenant en compte la direction de leur grain, transversalement aux couches de placage adjacentes.

16. Structure de paroi selon l'une quelconque des revendications précédentes, **caractérisée en ce qu'**elle comprend, sur ses deux surfaces opposées, 2-5 couches de placage (9, 11-13 ; 14, 16-18) les unes sur les autres, et au moins une couche de renforcement (10 ; 15) qui est agencée entre elles, ou elle comprend, sur des surfaces opposées, 1-5 couches de placage les unes sur les autres, qui sont entièrement imprégnées avec un adhésif, auquel cas la résistance, telle que la résistance superficielle, de ces couches de placage est supérieure à la résistance superficielle des couches de placage qui sont agencées entre lesdites couches de placage.

17. Structure de paroi selon l'une quelconque des revendications précédentes, **caractérisée en ce que** les feuilles de placage en bois sont jointes les unes aux autres avec 2-20 piliers, la forme la plus appropriée de la section transversale des piliers (3) étant une forme de polygone régulier, en particulier une forme de carré, de rectangle, une forme de parallélogramme ou d'hexagone, les panneaux de placage en bois étant reliés de préférence les uns aux autres avec des piliers (3) afin de former une structure tridimensionnelle qui est remplie d'un matériau d'isolation thermique, tel qu'un polyuréthane ou une laine minérale.

18. Structure de paroi selon l'une quelconque des revendications précédentes, **caractérisée en ce que** les panneaux de placage en bois (1, 2) comprennent des feuilles de forme rectangulaire dont la largeur est d'au moins 100 mm, de manière la plus appropriée de 150-750 mm, et dont la longueur est supérieure à 150 mm, de manière la plus appropriée de 200-1500 mm, et l'épaisseur des panneaux de placage en bois (1, 2) est de 4-120 mm et la masse volumique des panneaux de placage en bois présentant les couches de renforcement est supérieure à approximativement 750 kg/m³, de manière la plus appropriée d'approximativement 800-1350 kg/m³.

19. Utilisation de panneaux multicouches en fibres de bouleau dans une structure de paroi selon l'une quelconque des revendications précédentes, comprenant au moins une couche de renforcement (10 ; 15) qui est collée au panneau en fibres de bouleau pour améliorer sa résistance à la flexion dans les parois d'un boîtier d'isolation thermique, formé de panneaux de placage en bois reliés ensemble avec des piliers afin de former un boîtier à côtés ouverts et qui est prévu pour isoler des réservoirs métalliques contenant un gaz liquéfié, en particulier du gaz naturel liquéfié,
dans laquelle le panneau en fibres de bouleau comprend au moins une couche de renforcement (10 ; 15) qui est collée à la couche de placage en bois (11 ; 16) qui est située entre les couches superficielles (9, 13 ; 14, 18) qui sont formées par les deux surfaces opposées du panneau.
